# EUROPÄISCHE PATENTANMELDUNG

(11) **EP 4 570 512 A1**
(43) Veröffentlichungstag der Anmeldung: **18.06.2025**
(21) Anmeldenummer: 24212550.8
(22) Anmeldetag: 13.11.2024
(51) Int. Cl.: B60C 5/00, B60C 5/14, B60C 7/10, B60C 9/00, B60C 19/12

(54) **SCHUTZEINLAGE UND FAHRZEUGRAD**

(30) Priorität: 13.12.2023 DE 102023212580
(71) Anmelder: Continental Reifen Deutschland GmbH, 30175 Hannover (DE)
(72) Erfinder: Kahner, Rainer, 30175 Hannover (DE); Eder, Jan Martin, 30175 Hannover (DE); Krieger, Ralf, 30175 Hannover (DE); Grion, Mario, 30175 Hannover (DE)
(74) Vertreter: Continental Corporation

(57) **Zusammenfassung**

Die Erfindung betrifft eine Schutzeinlage (1) für einen Fahrzeugluftreifen (2), bevorzugt Leichtfahrzeugreifen, besonders bevorzugt Fahrradreifen und/oder Rollstuhlreifen und/oder Motorradreifen, aufweisend ein Elastomer. Eine verbesserte Pannensicherheit bei weiterhin vorteilhaftem Rollwiderstand sowie ein verbessertes Recycling wird dadurch ermöglicht, dass das Elastomer ein thermoplastisches Elastomer (TPE) ist und dass die Schutzeinlage eine Schutzlage (4) mit Festigkeitsträgern aufweist. Die Erfindung betrifft auch ein Fahrzeugrad aufweisend eine solche Schutzeinlage.

## Beschreibung

Die Erfindung betrifft eine Schutzeinlage für einen Fahrzeugluftreifen, bevorzugt Leichtfahrzeugreifen, besonders bevorzugt Fahrradreifen und/oder Rollstuhlreifen und/oder Motorradreifen, aufweisend ein Elastomer. Die Erfindung betrifft weiter ein Fahrzeugrad aufweisend eine solche Schutzeinlage.

Zur Reduzierung der Pannenhäufigkeit von Fahrzeugluftreifen sind verschiedene Strategien bekannt.

Aus der DE 3021946 A1 sind luftlose Reifen mit einem inneren massiven Füllkörper aus einem Luftblasen enthaltenden Polyurethan bekannt. Hierdurch sind die Reifen zwar unempfindlicher gegenüber Durchstich, dies ist aber mit einem erheblichen Materialeinsatz verbunden.

Aus der NL 7812531 A ist eine Schutzeinlage aus einem geschäumten Material bekannt, welcher in der axialen Mitte des Reifens als zusätzliche separat eingelegte Lage zwischen Reifen und Schlauch den Schlauch vor einem Durchstich schützen soll. Aus der FR 2844222 A1 ist eine zum Reifen zusätzliche Membran aus Polyurethan bekannt, welche zwischen Reifen und Schlauch angeordnet vor Durchstich schützen soll. Der Durchstichschutz ist bei derartigen Schutzeinlagen beschränkt.

Zur Reduzierung der Pannenhäufigkeit von Fahrzeugluftreifen an sich sind verschiedene Strategien bekannt. So kann der Reifen selbst verstärkt werden, beispielsweise durch eine Vergrößerung der Gummidicke einzelner Bauteile des Reifens, wie etwa dem Laufstreifen, oder durch zusätzliche hochfeste Gewebelagen. Durch derartige Maßnahmen kann beispielsweise das Durchdringen eines Festkörpers durch den Reifen erschwert oder gar verhindert werden.

So ist aus der DE 10 2005 018 742 A1 als auch aus der EP 1 682 362 B2 jeweils ein Fahrradreifen bekannt, der in einer zusätzlich zur Karkasse angeordneten Schutzlage des Reifens hochfeste Multifilamentgarne mit Polyester-polyarylat-Filamenten, welche aus geschmolzenem Flüssigkristallpolymer gesponnen sind, enthält.

Die Entwicklung geht zu einer verbesserten Nachhaltigkeit. Hierdurch gewinnt das Reifenrecycling, auch für Reifen für Leichtfahrzeuge, insbesondere Fahrradreifen, eine größere Bedeutung.

Bei den oben genannten in den Reifen integrierten Schutzlagen ist allerdings nachteilig, dass derartige hochfeste Festigkeitsträger aufgrund der Kombination von vergleichsweise hoher Reißfestigkeit mit hoher Flexibilität eher nicht spröde sind. Dies wiederum ist aber nachteilig für das an Bedeutung gewinnende Reifenrecycling, da die Festigkeitsträger bei der Scherung des Zerkleinerns nicht gut brechen. Zur Vermeidung der damit einhergehenden Nachteile wäre ein zusätzlicher Verfahrensschritt nötig.

Es war die primäre Aufgabe der vorliegenden Erfindung, die vorstehend beschriebenen Nachteile des Standes der Technik auszuräumen oder zumindest zu verringern. Es war dabei die primäre Aufgabe eine verbesserte Pannensicherheit bei weiterhin vorteilhaftem Rollwiderstand sowie ein verbessertes Recycling zu ermöglichen.

Die Aufgabe wird dadurch gelöst, dass das Elastomer ein thermoplastisches Elastomer (TPE) ist und dass die Schutzeinlage eine Schutzlage mit Festigkeitsträgern aufweist.

Hierdurch ist eine verbesserte Pannensicherheit bei weiterhin vorteilhaftem Rollwiderstand sowie ein verbessertes Recycling ermöglicht.

Die Festigkeitsträger der Schutzlage sind nicht Teil des Reifens, sondern sind Bestandteil der Schutzeinlage. Es hat sich herausgestellt, dass die Schutzlage auch als Teil der Schutzeinlage hervorragend zur Verbesserung des Pannenschutzes geeignet ist. Somit kann bei nur geringem Mehrgewicht ein Schutz gegenüber Durchstichen und anderen Verletzungen erreicht werden. Im Falle eines Durchstichs der Schutzeinlage kann das thermoplastische Elastomer zur Abdichtung des Einstichkanals beitragen.

Gleichzeitig ermöglicht die Schutzeinlage die verbesserten Pannenschutzeigenschaften ohne zusätzliche, in der Regel bezüglich Rollwiderstand und/oder Recyclingfähigkeit nachteiligen, Maßnahmen am Reifen an sich. Dadurch, dass die Festigkeitsträger Teil der Schutzeinlage sind, lassen sich diese einfach dem Recycling zuführen. Ein aufwändiges Abtrennen der Festigkeitsträger als Bestandteil des Reifens ist somit nicht nötig. Ein Recycling des Reifens und Schutzeinlage aufweisend die Festigkeitsträger ist unabhängig möglich.

Der Einsatz des thermoplastischen Elastomers in der Schutzeinlage ermöglicht zudem eine einfache Abtrennung der Festigkeitsträger vom thermoplastischen Elastomer der Schutzeinlage.

Thermoplastische Elastomere (TPE) sind mehrphasige Systeme: Sie haben eine die elastischen Eigenschaften bestimmende Weichphase mit einer Glasübergangstemperatur unter der Gebrauchstemperatur, sowie eine die thermoplastischen Eigenschaften bestimmende, in der Weichphase nicht lösliche thermoplastische Hartphase, welche den Schmelzbereich festlegt.

Das TPE kann durch Wärmeeinwirkung verflüssigt und somit auf einfache Art und Weise von weiteren Materialien der Schutzeinlage getrennt werden. Das so extrahierte TPE kann wiederverwertet werden. Ein insbesondere sortenreines Recycling ist hierdurch erleichtert.

Ein weiterer Vorteil besteht darin, dass die Schutzeinlage eine einfache nachrüstbare Verbesserung des Pannenschutzes eines Reifens bzw. Rades ermöglicht.

Somit ist auf einfache Art und Weise eine Schutzeinlage zur Verfügung gestellt, die eine verbesserte Pannensicherheit bei nur geringfügig höherem Rollwiderstand aufweist und der ein verbessertes Recycling ermöglicht.

Die Schutzeinlage für den Fahrzeugluftreifen ist dazu geeignet und vorgesehen, zumindest in der axialen Mitte des Reifens radial innerhalb des Reifens am Reifen angeordnet zu sein bzw. zu werden. Die Schutzeinlage ist dann dazu geeignet und vorgesehen, bei dem auf der Felge montierten Fahrzeugluftreifen als Schutzeinlage zumindest in der axialen Mitte des Reifens zwischen Reifen und einer von Reifen und Felge umschlossener Luftkammer angeordnet zu sein bzw. zu werden. Die Luftkammer kann von einem Fahrschlauch eingeschlossen sein. Dann ist die Schutzeinlage zwischen Fahrzeugluftreifen und Schlauch angeordnet. Die Schutzeinlage kann aber auch für einen Reifen im schlauchlosen Betrieb vorgesehen und geeignet sein.

Das TPE kann zumindest über die gesamte Längserstreckung der Schutzeinlage angeordnet sein. Das TPE kann über die gesamte Breitenerstreckung eines senkrecht zur Längserstreckungsrichtung U der Schutzeinlage genommenen Querschnittes der Schutzeinlage angeordnet sein. Die Schutzeinlage kann aus der Schutzlage und dem TPE bestehen.

Der Begriff "Leichtfahrzeug" bezeichnet im Sinne der Anmeldung Fahrzeuge mit einer Leermasse von maximal 425 kg (ohne Batterien bei Elektrofahrzeugen), bevorzugt Fahrräder und/oder Krankenfahrstühle und/oder Motorräder und/oder Fahrzeuge der Fahrzeugklasse L im Sinne der EU Verordnung 168/2013, welche jeweils die Erfordernisse der Leermasse von maximal 425 kg erfüllen.

Das Leichtfahrzeug, bevorzugt Fahrrad, kann rein mit Muskelkraft angetrieben sein und somit keinen Antriebsmotor aufweisen. Das Leichtfahrzeug, bevorzugt Fahrrad, kann aber auch einen Antriebsmotor, bevorzugt einen Elektromotor, zum Antrieb des Leichtfahrzeuges aufweisen. Der bevorzugt elektrische Antriebsmotor kann dabei als Hilfsmotor zur Trittunterstützung oder als alleiniger Antrieb des Fahrzeugs ausgelegt sein. Das Leichtfahrzeug, bevorzugt Fahrrad, kann als Lastenfahrzeug ausgelegt sein. Das Leichtfahrzeug kann zwei, drei, vier oder mehr Räder aufweisen.

Kraftfahrzeuge der Fahrzeugklasse L im Sinne der EU Verordnung 168/2013 umfassen insbesondere Fahrzeuge gemäß den Klassen L1e und/oder L2e und/oder L3e und/oder L4e und/oder L5e und/oder L6e.

Im Folgenden werden vorteilhafte Ausführungsformen der Erfindung beschrieben.

Eine vorteilhafte Ausführungsform ist dadurch gegeben, dass das TPE ein expandiertes, bevorzugt ein expandiertes geschlossenporiges, TPE ist.

Es hat sich gezeigt, dass sich das expandierte, d.h. geschäumte, bevorzugt expandierte geschlossenporige, TPE hervorragend für die Schutzeinlage eignet.

Das expandierte, bevorzugt expandierte geschlossenporige, TPE vereint ein für die Materialstärke der Schutzeinlage geringes Gewicht mit hoher Dauerbelastbarkeit. Zudem zeichnet sich die Schutzeinlage aufgrund des hohen Luftanteils des expandierten TPE durch einen nur geringen Hystereseverlust aus.

Die Schutzeilage weist durch den Einsatz des expandierten, bevorzugt expandierten geschlossenporigen, TPEs nur ein geringes Mehrgewicht auf. Ebenso sind die Flexibilität sowie die Fahreigenschaften eines Luftreifens durch die Anordnung einer derartigen Schutzeinlage nur geringfügig eingeschränkt. Zudem zeichnet sich der Schlauch aufgrund des hohen Luftanteils des expandierten, bevorzugt expandierten geschlossenporigen, TPEs durch einen nur geringen Hystereseverlust aus.

Die Pannensicherheit ist bei gleichzeitig nur geringfügig verschlechtertem Rollwiderstand weiter verbessert.

Im Falle eines expandierten geschlossenporigen TPEs weist dieses zudem eine hohe Elastizität auf. Im Falle eines Durchstichs des Schlauchs dichtet dann der Schlauchkörper aus dem expandierten geschlossenporigen TPE den Einstichkanal so ab, dass ein größerer Luftverlust vermieden oder verringert wird. Gleichzeitig ermöglicht die Schutzeinlage aus dem expandierten geschlossenporigen TPE durch die eigene Strukturfestigkeit verbesserte Notlaufeigenschaften selbst bei völligem Luftverlust.

Zweckmäßig ist es, wenn die Schutzeinlage, insbesondere in der axialen Mitte, eine Materialstärke D von mindestens 0,5 mm, bevorzugt von mindestens 5 mm, besonders bevorzugt von mindestens 8 mm, aufweist. Die Materialstärke einer solchen Schutzeinlage verringert die Wahrscheinlichkeit eines vollständigen Durchstichs bis zum Schlauch durch einen Fremdkörper.

Die Materialstärke D, insbesondere in der axialen Mitte, ist gemessen senkrecht zu einer äußeren Oberfläche der Schutzeinlage.

Eine vorteilhafte Ausführungsform ist dadurch gegeben, dass das thermoplastische Elastomer homogen vorliegt.

Das TPE ist somit nicht expandiert. Eine derartige Schutzeinlage ist einfach herstellbar und kann dünnwandig ausgeführt sein. Die vorteilhaften Eigenschaften der Festigkeitsträger tragen wesentlich zum Pannenschutz bei.

Eine vorteilhafte Ausführungsform ist dadurch gegeben, dass das thermoplastische Elastomer ein Block-Copolymerisat, bevorzugt ein thermoplastisches Polyurethan (TPE-U), ist. Das Block-Copolymerisat kann durch Block-Copolymerisation hergestellt sein.

Vorteilhafte Block-Copolymerisate sind thermoplastische Polyurethane (TPE-U) aus Polyester und Polyurethan (PU) und/oder aus Polyether (PE) und Polyurethan (PU) und/oder thermoplastische Polystyrol-Polydien-Blockcopolymere (TPE-S) aus Polyisopren (IR) und Polystyrolen (PS) und/oder aus Polyethylen (PE) und Polystyrolen (PS) und/oder aus Polybutylen (PB) und Polystyrolen (PS) und/oder thermoplastische Polyester-Elastomere (TPE-E) aus Polyether und aromatischem Polyester und/oder thermoplastische Polyether-Polyamid-Elastomere (TPE-A) aus Polyether und aliphatischem Polyamid und/oder Ethylen-Vinylacetat-Kautschuk (EVM) mit 20-40 Gewichtsprozent Vinylacetat.

Als besonders vorteilhaft hat sich thermoplastisches Polyurethan (TPE-U) herausgestellt.

Thermoplastisches Polyurethan zeichnet sich durch vorteilhafte Rollwiderstandseigenschaften aus. Thermoplastisches Polyurethan zeichnet sich auch durch seine hervorragenden Recyclingeigenschaften auf. Eine Auftrennung der Materialien durch heiße Filtration ermöglicht sortenreines Stoffrecycling. Bezüglich chemischen Recyclings ist keine Feedstock-Trennung in Polyurethan und Festigkeitsträger nötig, da depolymerisierte Bestandteile aufgetrennt und weiterverwendet werden können.

Zweckmäßig ist es, wenn das TPE-U expandiertes geschlossenporiges thermoplastisches Polyurethan ist. Es kann sich um das von der BASF SE unter dem Markennamen Infinergy ^{®} vertriebene Material handeln.

Zweckmäßig ist es aber auch, wenn das TPE-U homogenes thermoplastisches Polyurethan ist.

Es eigenen sich weitere thermoplastische Elastomere. Diese können homogen oder expandiert geschlossenporig, bevorzugt homogen, vorliegen.

Vorteilhaft sind etwa Mischungen unverträglicher Polymere, wie zum Beispiel unvernetzte thermoplastische Elastomere (TPE-O) aus Ethylen-Propylen-Kautschuk (EPM) und Polypropylen (PP) und/oder aus Ethylen-Propylen-DienKautschuk (EPDM) und Polypropylen (PP) und/oder vernetzte thermoplastische Elastomere (TPE-V ) aus Ethylen-Propylen-Kautschuk (EPDM) und Polypropylen (PP) und/oder aus Acrylnitril-Butadien-Kautschuk (Nitrilkautschuk, NBR) und Polypropylen (PP) und/oder aus Ethylen-Vinylacetat-Copolymere (EVA) und Polyvinylidenchlorid (PVDC).

Vorteilhaft sind auch mit Weichmachern versetzte teilkristalline Polymere, wie zum Beispiel mit Weichmachern versetztes Polyvinylchlorid (Weich-PVC) und/oder mit Olefinen versetzter Naturkautschuk.

Weitere Möglichkeiten folgen aus der Modifikation von Kautschuken, wie zum Beispiel durch Hydrochlorierung von Naturkautschuk sowie schwefelsaure Cyclisierung von Naturkautschuk.

Eine vorteilhafte Ausführungsform ist dadurch gegeben, dass die Schutzlage der Schutzeinlage radial außerhalb des TPEs der Schutzeinlage angeordnet und/oder dass die Schutzlage in das TPE der Schutzeinlage eingebettet angeordnet ist.

Begriffe wie "axial", "radial", "innen", "außen", sind bezüglich der Schutzeinlage im Sinne der Erfindung zu verstehen als Angaben bezogen auf eine bestimmungsgemäße Anordnung der Schutzeinlage am Fahrzeugluftreifen und sind von der fachkundigen Person auf die Schutzeinlage an sich übertragbar. So entspricht beispielsweise die Längserstreckungsrichtung U der Schutzeinlage, bei der Anordnung der Schutzeinlage in den Reifen, der Umfangserstreckungsrichtung des Reifens.

Bei einer radial außerhalb des TPEs der Schutzeinlage angeordneten Schutzlage ist in der axialen Mitte der Schutzeinlage nur radial innerhalb der Schutzlage thermoplastisches Elastomer angeordnet. Eine radial außerhalb des TPEs der Schutzeinlage angeordnete Schutzlage schützt besonders effektiv vor Eindringen eines Festkörpers von außen. Gleichzeitig ist eine einfache Herstellbarkeit der Schutzeinlage ermöglicht.

Bei einer in das TPE der Schutzeinlage eingebettet angeordneten Schutzlage ist in der axialen Mitte sowohl radial außerhalb als auch radial innerhalb der Schutzlage thermoplastisches Elastomer angeordnet.

Hierdurch ist eine besonders gute Einbettung der Schutzlage in den Schlauchkörper erreichbar bei gleichzeitig guter Recyclingfähigkeit.

Die Schutzwirkung der Schutzlage ist wesentlich durch die Festigkeitsträger beeinflusst.

Die Festigkeitsträger der Schutzlage können aus einer Faser oder aus mehreren Fasern gebildet sein.

Ein Festigkeitsträger aus einer Faser ist aus einem Einzelfilament gebildet. Ein Festigkeitsträger aus mehreren Fasern kann in Form eines Filamentbündels oder eines Garns oder eines Kords ausgebildet sein.

Ein Festigkeitsträger aufweisend ein Material kann ganz oder teilweise aus diesem Material gebildet sein Ein Festigkeitsträger aufweisend ein Material kann entsprechend ganz aus diesem Material gebildet sein. Insbesondere können alle Fasern des Festigkeitsträgers aus diesem Material gebildet sein. Ein Festigkeitsträger aufweisend ein Material kann auch nur teilweise aus diesem Material gebildet sein. Insbesondere kann der Festigkeitsträger eine oder mehrere Fasern aus diesem Material und zumindest eine Faser aus einem zu diesem Material verschiedenen Material aufweisen.

Eine vorteilhafte Ausführungsform ist dadurch gegeben, dass die Festigkeitsträger eine Zugfestigkeitsdichte von mindestens 0,04 GPa/(g/cm^3), bevorzugt von mindestens 0,3 GPa/(g/cm^3), besonders bevorzugt von mindestens 1,8 GPa/(g/cm^3), aufweisen. Die Zugfestigkeitsdichte ist dabei die Zugfestigkeit pro Massendichte.

Bei Verwendung von Festigkeitsträgern mit einer geringeren Zugfestigkeitsdichte als 0,04 GPa/(g/cm^3) ist keine ausreichende Schutzwirkung durch die Schutzlage gegeben.

Bereits eine Zugfestigkeitsdichte von mindestens 0,04 GPa/(g/cm^3) ermöglicht durch den Einsatz von festen leichten Materialien eine verbesserte Pannenschutzsicherheit bei vorteilhaftem Rollwiderstand.

Eine bevorzugte Zugfestigkeitsdichte von mindestens 0,3 GPa/(g/cm^3) ermöglicht einen noch besseren Pannenschutz bei vorteilhaftem Rollwiderstand.

Eine besonders bevorzugte Zugfestigkeitsdichte von mindestens 1,8 GPa/(g/cm^3) ermöglicht einen weiter verbesserten Pannenschutz bei vorteilhaftem Rollwiderstand.

Ein entsprechender Festigkeitsträger kann Polyester-polyarylat-Filamente und/oder Aramid und/oder PBO aufweisen oder daraus gebildet sein.

Zweckmäßig ist es, wenn die Festigkeitsträger eine Zugfestigkeitsdichte von mindestens 0,04 bis weniger als 0,3 GPa/(g/cm^3) aufweisen. Ein derartiger Festigkeitsträger kann Polyamid 6.6 aufweisen oder daraus gebildet sein.

Zweckmäßig kann es aber auch sein, wenn die Festigkeitsträger eine Zugfestigkeitsdichte von mindestens 0,3 bis weniger als 1,8 GPa/(g/cm^3) aufweisen. Ein derartiger Festigkeitsträger kann Stahl aufweisen oder daraus gebildet sein.

Eine vorteilhafte Ausführungsform ist dadurch gegeben, dass die Festigkeitsträger ganz oder teilweise aus textilem Festigkeitsträgermaterial gebildet sind, welches ausgewählt ist aus der Gruppe bestehend aus Polyester-polyarylat, Aramid und Polyphenylenbenzobioxazol (PBO).

Das Polyester-polyarylat liegt im Festigkeitsträger in der Regel als Polyester-polyarylat-Filamente vor, welche aus geschmolzenen Flüssigkristallpolymeren gesponnen sind.

Festigkeitsträger, welche ganz oder teilweise aus den Polyester-polyarylat-Filamenten gebildet sind, zeichnen sich durch eine besonders hohe Durchstichfestigkeit bei gleichzeitig hoher Flexibilität aus.

Zweckmäßig ist es, wenn die Festigkeitsträger aufweisend die Polyester-polyarylat-Filamente eine Zugfestigkeitsdichte von mindestens 1,8 GPa/(g/cm^3), bevorzugt von mindestens 2,0 GPa/(g/cm^3), aufweisen.

Die Festigkeitsträger aufweisend Polyester-polyarylat-Filamente können z.B. Multifilamentgarne des Typs Vectran^{®} der Kuraray Co. Ltd sein. Hierdurch können besonders hohe Durchstichfestigkeiten erzielt werden.

Zweckmäßig ist es, wenn die Polyester-polyarylat-Filamente einen Durchmesser von weniger als 0,040 mm aufweisen. Bei Verwendung derartig dünner Filamente erzielt man eine gute dynamische Haltbarkeit.

Durch Festigkeitsträger, die ganz oder teilweise aus Aramid gebildet sind, ist eine vorteilhafte Schutzwirkung ermöglicht.

Aramide sind insbesondere m-Aramid, p-Aramid und Mischungen aus m-Aramid und p-Aramid.

Die Festigkeitsträger aufweisend Aramid können eine Zugfestigkeitsdichte von mindestens 1,8 GPa/(g/cm^3) aufweisen.

Die Festigkeitsträger aufweisend Aramid können z.B. ganz oder teilweise aus Multifilamentgarnen des Typs Kevlar^{®} der DuPont de Nemours, Inc. gebildet sein. Hierdurch können besonders hohe Durchstichfestigkeiten erzielt werden.

Durch Festigkeitsträger, die ganz oder teilweise aus PBO gebildet sind, ist eine vorteilhafte Schutzwirkung ermöglicht.

Die Festigkeitsträger aufweisend PBO können eine Zugfestigkeitsdichte von mindestens 3,3 GPa/(g/cm^3) aufweisen.

Eine vorteilhafte Ausführungsform ist dadurch gegeben, dass die Festigkeitsträger ganz oder teilweise aus einem textilem Festigkeitsträgermaterial gebildet sind, welches ausgewählt ist aus der Gruppe bestehend aus Polyestern, Polyamiden, Polyurethanen, Glas, Kohlenstoff, Cellulosen, Polycarbonaten, Polyketonen und Kombinationen davon gebildet ist.

Vorteilhaft sind dabei Polyester. Polyester umfassen zum Beispiel Polyethylenterephthalat (PET) und/oder Polyethylennaphthalat (PEN) und/oder Polybutylenterephthalat (PBT) und/oder Polyethylenfuranoat (PEF). Vorteilhaft sind auch Polyamide. Beispiele für Polyamide sind Nylon-4,6 (PA 4.6) und/oder Nylon-4,10 (PA 4.10) und/oder Nylon-6 (PA 6) und/oder Nylon-6,6 (PA 6,6) und/oder Nylon-6,12 (PA 6.12) und/oder Nylon-10,10 (PA 10.10) und/oder Nylon-12,12 (PA 12.12). Geeignete Cellulosen sind beispielsweise regenerierte Cellulosen (insbesondere Viskose oder Kunstseide) und/oder Celluloseester. Die bevorzugten Materialien für das textile Festigkeitsträgermaterial sind Polyester und/oder Viskose und/oder Nylon und/oder Kombinationen davon.

Eine vorteilhafte Ausführungsform ist dadurch gegeben, dass die Festigkeitsträger aus einem textilen Festigkeitsträgermaterial gebildet sind und aus einem oder mehreren Garnen bestehen und eine Gesamtfeinheit von 100 dtex bis 800 dtex aufweisen.

Derartige dünne textile Festigkeitsträger bieten einen vorteilhaften Pannenschutz bei gleichzeitig geringem Rollwiderstand.

Eine vorteilhafte Ausführungsform ist dadurch gegeben, dass die Festigkeitsträger ein oder mehrere Stahlfilamente aufweisen oder daraus gebildet sein.

Ein derartiger Schlauch mit Festigkeitsträgern aufweisend zumindest ein Stahlfilament weist einen hoher Schnittschutz und Durchstichschutz auf.

Die Festigkeitsträger aufweisend zumindest ein Stahlfilament können eine Zugfestigkeitsdichte von mindestens 0,3 bis weniger als 1,8 GPa/(g/cm^3) aufweisen.

Eine vorteilhafte Ausführungsform ist dadurch gegeben, dass die Festigkeitsträger in einem Gewebe, bevorzugt in einem Cordgewebe oder einem Kreuzgewebe, angeordnet sind.

Hierdurch ist die Anordnung der Festigkeitsträger erleichtert. Das Gewebe kann ganz oder teilweise aus den Festigkeitsträgern gebildet sein. Die Festigkeitsträger können im Gewebe alle in der gleichen Richtung orientiert sein. Festigkeitsträger können aber auch kreuzend zueinander angeordnet sein. Alle Festigkeitsträger können dabei gleich ausgebildet sein. Die Festigkeitsträger können sich aber auch insbesondere bezüglich ihres Materials voneinander unterscheiden. Hierdurch können die Vorteile unterschiedlicher Festigkeitsträger miteinander kombiniert werden. Es können zwei oder mehr unterschiedliche Arten von Festigkeitsträgern zum Einsatz kommen, wobei sich die Arten in ihrem Material unterscheiden können.

Ein Cordgewebe ermöglicht einen besonders vorteilhaften Rollwiderstand, ein Kreuzgewebe ist besonders vorteilhaft bezüglich des Pannenschutzes.

Alle oder ein Teil der Festigkeitsträger der Schutzlage können weitgehend parallel zueinander ausgerichtet sein.

Eine vorteilhafte Ausführungsform ist dadurch gegeben, dass die Schutzeinlage geeignet ist für eine Reifenbreite mit einem Wert von 18 mm bis 122 mm, bevorzugt von 23 mm bis 65 mm oder von 50 mm bis 122 mm.

Die Schutzeinlage wird in der Regel passend zur Reifenbreite und -größe des Reifens, gewählt, mit welchem er zusammen auf einer Felge zum Rad montiert und als Teil des Rades am Fahrzeug angebracht wird bzw. ist. Eine Schutzeinlage ist dabei meist mit mehreren Reifenbreiten kompatibel. Mit welchen Reifenbreiten die konkrete Schutzeinlage kompatibel ist, wird in der Regel vom Hersteller angegeben. Die Reifenbreite ist die nominelle Querschnittsbreite des Reifens gemäß E.T.R.T.O. in der zum Anmeldezeitpunkt dieser Patentanmeldung geltenden Fassung.

Die Schutzeinlage eignet sich hervorragend für Fahrzeuge mit Reifen der angegebenen Reifenbreite zur Verbesserung der Pannensicherheit bei gleichzeitig vorteilhaftem Rollwiderstand, bevorzugt für Krankenfahrstühle und/oder Fahrräder mit Reifen der angegebenen Reifenbreite.

Die Schutzeinlage kann vorgesehen und geeignet sein für eine Reifenbreite mit einem Wert von 23 mm bis 42 mm. Eine derartige Schutzeinlage eignet sich für ein Rennrad.

Die Schutzeinlage kann vorgesehen und geeignet sein für eine Reifenbreite mit einem Wert von 30 mm bis 65 mm. Eine derartige Schutzeinlage eignet sich hervorragend für ein Gravelbike, City- oder Treckingrad.

Die Schutzeinlage kann vorgesehen und geeignet sein für eine Reifenbreite mit einem Wert von 32 mm bis 55 mm. Eine derartige Schutzeinlage eignet sich hervorragend für einen Krankenfahrstuhl.

Die Schutzeinlage kann vorgesehen und geeignet sein für eine Reifenbreite mit einem Wert von 50 mm bis 122 mm. Eine derartige Schutzeinlage eignet sich hervorragend für ein Mountainbike.

Eine vorteilhafte Ausführungsform ist dadurch gegeben, dass es sich um eine Schutzeinlage für ein Fahrrad und/oder einen Rollstuhl, bevorzugt für ein Fahrrad, handelt.

Der Begriff "Fahrrad" umfasst im Sinne der Anmeldung Fahrräder unterschiedlichster Art, insbesondere Fahrräder mit zwei oder mehr Rädern. Das Fahrrad kann rein mit Muskelkraft angetrieben sein und somit keinen Antriebsmotor aufweisen. Das Fahrrad kann aber auch einen Antriebsmotor, bevorzugt einen Elektromotor, zum Antrieb des Fahrrades aufweisen. Der bevorzugt elektrische Antriebsmotor kann dabei als Hilfsmotor zur Trittunterstützung, wie beispielsweise bei einem Pedelec oder einem S-Pedelec, ausgelegt sein. Es kann sich dabei um ein Lastenrad handeln, wie es beispielsweise zur Paketauslieferung genutzt wird.

Eine verbesserte Pannensicherheit bei gleichzeitig geringem Rollwiderstand ist bei Fahrrädern von großer Wichtigkeit. Der erfindungsgemäße Schlauch ermöglicht eine entsprechende Verbesserung, ohne aufwändig den Fahrradmantel an sich zu ändern.

Bei einem Einsatz des Schlauches bei einem Fahrrad mit motorischem Hilfsantrieb ist ein hoher Pannenschutz vorteilhaft, da er die Zuverlässigkeit des Fahrzeuges erhöht. Gleichzeitig ermöglicht der geringe Rollwiderstand eine große Reichweite des Fahrrades.

Eine Erhöhung der Pannensicherheit ist auch für einen Krankenfahrstuhl von größter Wichtigkeit.

Eine vorteilhafte Ausführungsform ist dadurch gegeben, dass es sich um einen Schlauch für ein Leichtfahrzeug mit einem motorischen Antrieb, bevorzugt mit einem motorischen Hilfsantrieb oder einem rein motorischen Antrieb, handelt.

Auch für Leichtfahrzeuge mit einem motorischen Antrieb ist ein derartiger Schlauch mit verbesserter Pannensicherheit und großer Reichweite vorteilhaft.

Der bevorzugt elektrische motorische Hilfsantrieb kann als Hilfsmotor der Trittunterstützung dienen.

Der Schlauch kann geeignet sein für ein Leichtfahrzeug mit einem rein motorischen Antrieb, etwa für ein entsprechendes Kleinkraftrad und/oder Leichtkraftrad und/oder Kleinkraftrad und/oder Kraftrad und/oder Motorrad und/oder leichtes Squad.

Bezüglich des Fahrzeugrades wird die Aufgabe durch ein Fahrzeugrad für ein Fahrzeug, bevorzugt für ein Leichtfahrzeug, besonders bevorzugt für ein Fahrrad und/oder einen Krankenfahrstuhl und/oder ein Motorrad, aufweisend eine Felge, einen auf der Felge montierten Fahrzeugluftreifen, und einer zumindest in der axialen Mitte radial innerhalb des Fahrzeugluftreifens angeordneten erfindungsgemäßen Schutzeinlage aufweisend ein thermoplastisches Elastomer (TPE) und eine Schutzlage mit Festigkeitsträgern.

Die Schutzeinlage ist somit dazu geeignet und vorgesehen, bei dem auf der Felge montierten Fahrzeugluftreifen als Schutzeinlage zumindest in der axialen Mitte des Reifens zwischen Reifen und einer von der Felge und dem Reifen umschlossenen Luftkammer angeordnet zu sein.

Die Luftkammer kann zudem von einem Fahrschlauch eingeschlossen sein. Dann ist die Schutzeinlage zwischen Fahrzeugluftreifen und Schlauch angeordnet.

Das Fahrzeugrad kann aber auch schlauchlos ausgebildet sein. Die Schutzeinlage kann dann direkt die Luftkammer mit begrenzen. Üblicherweise wird die Dichtigkeit eines solchen Fahrzeugrades durch ein Dichtmittel wie eine Dichtmilch sichergestellt.

Die Schutzeinlage ist dabei als vom Fahrzeugluftreifen separat ausgeführtes Teil an den Reifen von radial innen anschließend angeordnet. Die Schutzeinlage kann dabei in den Reifen als loses Teil eingelegt sein oder mit diesem, z.B. durch ein Klebemittel, in der Regel einfach lösbar verbunden sein. Der Reifen und die Schutzeinlage sind dabei separat gefertigt und werden als fertige Bauteile aneinandergelegt oder aneinandergefügt. Die Schutzeinlage mit den Festigkeitsträgern kann somit auf einfache Art und Weise vom Reifen getrennt und separat vom Reifen dem Recycling zugeführt werden.

Ein solches Fahrzeugrad weist eine hohe Pannensicherheit bei weiterhin vorteilhaften Rollwiderstandseigenschaften und einer verbesserten Recyclingfähigkeit auf. Bevorzugt handelt es sich um ein Fahrzeugrad für ein Leichtfahrzeug, besonders bevorzugt für ein Fahrrad und/oder einen Krankenfahrstuhl und/oder ein Motorrad.

Eine vorteilhafte Ausführungsform des Fahrzeugrades ist dadurch gegeben, dass die Schutzeinlage im Bereich der Schulterbereiche des Reifens endet und/oder sich entlang der Seitenwände des Reifens nach radial innen erstreckt und dabei radial außerhalb der Wulstbereiche des Reifens endet oder sich dabei bis radial innerhalb der Wulstbereiche des Reifens erstrecken.

Endet die Schutzeinlage im Bereich der Schulterbereiche des Reifens, so ist bei geringem Materialeinsatz der für Durchstiche besonders anfällige Laufstreifenbereich vorteilhaft verstärkt.

Erstreckt sich die Schutzeinlage zumindest entlang der Seitenwände des Reifens nach radial innen und endet radial außerhalb der Wulstbereiche des Reifens, so sind die Seitenwände verstärkt und die Notlaufeigenschaften verbessert.

Erstreckt sich die Schutzeinlage bis radial innerhalb der Wulstbereiche des Reifens, so kann die Luftdichtigkeit eines schlauchlosen Rades weiter verbessert sein bzw. bei einem Fahrzeugrad mit Schlauch ist der Schlauch besonders gut vor Anscheuerung am Reifen und/oder an der Felge geschützt.

Die Tabelle 1 zeigt Beispiele für vorteilhafte Festigkeitsträger der Schutzeinlage gemäß der Erfindung. Eine erfindungsgemäße Schutzeinlage aufweisend derartige Festigkeitsträger in der Schutzlage der TPE aufweisenden Schutzeinlage weist einen vorteilhaften Pannenschutz bei gleichzeitig guter Recyclingfähigkeit auf. Die Festigkeitsträger sind aus dem jeweils angegebenen Material gebildet. Die Festigkeitsträger 1 bis 4 sind aus jeweils einem Garn aus dem angegebenen textilen Festigkeitsträgermaterial und der angegebenen Feinheit ausgebildet. Der Festigkeitsträger 5 ist aus einem Stahlfilament gebildet.

**Tabelle 1**

| Nr. | Material | Feinheit [dtex] | Zugfestigkeitsdichte [GPa/(g/cm^3)] |
|---|---|---|---|
| 1 | Vectran | 440 | 2,3 |
| 2 | PBO | 550 | 3,9 |
| 3 | Aramid | 420 | 2,1 |
| 4 | Nylon | 470 | 0,1 |
| 5 | Stahl | | 0,4 |

Alle in dieser Beschreibung wiedergegebenen Ausführungsformen der erfindungsgemäßen Schutzeinlagen bzw. Fahrzeugräder stellen Beispiele der Ausgestaltung der Erfindung dar und sind nicht einschränkend zu sehen.

Entsprechend sind auch durch einzelne oder mehrere Merkmale einer Ausführungsform alleine oder die Kombination der Merkmale verschiedener Ausführungsformen weitere Ausführungsformen der Erfindung gegeben, die Gegenstand der Erfindung sind, soweit diese nicht explizit anders in der Beschreibung erläutert wird. Ferner sind auch Kombinationen von bevorzugten und besonders bevorzugten Ausführungsformen untereinander miteinander kombinierbar.

Weitere Merkmale, Vorteile und Einzelheiten der Erfindung werden nun anhand der schematischen Zeichnungen, die Ausführungsbeispiele darstellen, näher erläutert.

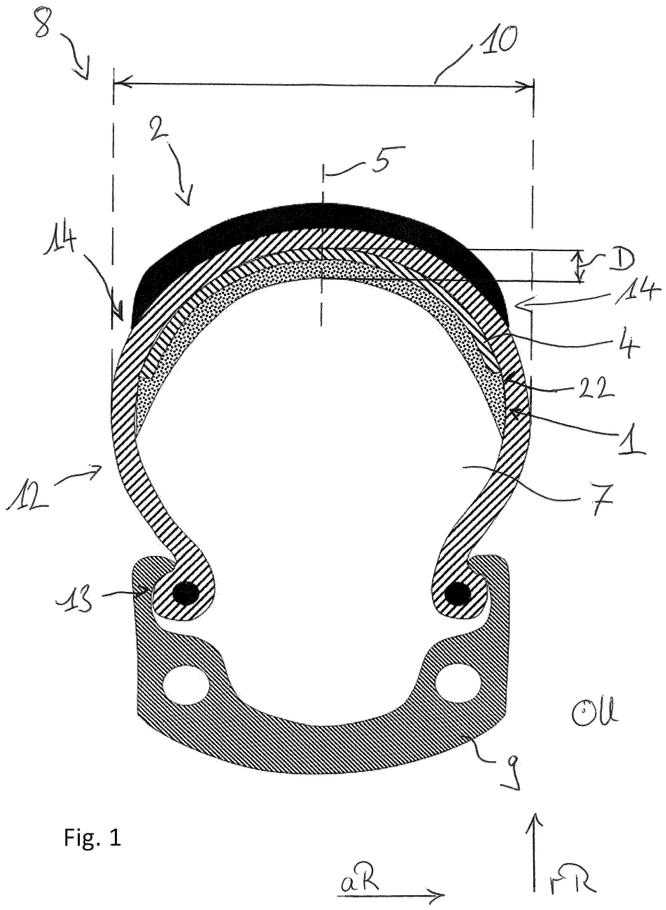

Dabei zeigt die
Fig. 1 bis Fig. 4 jeweils einen Querschnitt eines Fahrzeugrades aufweisend eine erfindungsgemäße Schutzeinlage.

Die Fig. 1 bis Fig. 4 zeigen jeweils einen Querschnitt eines Fahrzeugrades 8, aufweisend eine Felge (9), einen auf der Felge montierten Fahrzeugluftreifen (2), und einer zumindest in der axialen Mitte 5 radial innerhalb des Fahrzeugluftreifens (2) angeordneten Schutzeinlage (1) für den Fahrzeugluftreifen, wobei die Schutzeinlage 1 ein thermoplastisches Elastomer (TPE) sowie eine Schutzlage (4) mit Festigkeitsträgern aufweist.

Die Schutzeinlage1 ist zumindest in der axialen Mitte 5 des Reifens 2 zwischen Reifen 2 und einer von Reifen 2 und Felge 9 umschlossener Luftkammer 7 angeordnet. Die Luftkammer 7 kann von einem Fahrschlauch 3 eingeschlossen sein. Dann ist die Schutzeinlage 1 zwischen Fahrzeugluftreifen 2 und Schlauch 3 angeordnet. Die Schutzeinlage 1 kann aber auch für einen Reifen 2 im schlauchlosen Betrieb vorgesehen und geeignet sein.

Das TPE der Schutzeinlage 1 ist zumindest über die gesamte Längserstreckung der Schutzeinlage 1 angeordnet. Das TPE kann über die gesamte Breitenerstreckung eines senkrecht zur Längserstreckungsrichtung U der Schutzeinlage 1 genommenen Querschnittes der Schutzeinlage 1 angeordnet sein. Die Schutzeinlage 1 kann aus der Schutzlage 4 und dem TPE bestehen.

Das TPE ist ein, insbesondere durch Block-Copolymerisation hergestelltes, Block-Copolymerisat, bevorzugt ein thermoplastisches Polyurethan. Es eignen sich aber auch andere TPE wie Mischungen unverträglicher Polymere, mit Weichmachern versetzte teilkristalline Polymere und/oder modifizierter Kautschuk.

Das TPE ist ein expandiertes TPE. Bevorzugt handelt es sich um ein expandiertes geschlossenporiges TPE. Die Schutzeinlage 1 aufweisend expandiertes, bevorzugt expandiertes geschlossenporiges, TPE kann, insbesondere in der axialen Mitte 5, eine Materialstärke D von mindestens 0,5 mm, bevorzugt von mindestens 5 mm, besonders bevorzugt von mindestens 8 mm, aufweisen. Die Materialstärke D, insbesondere in der axialen Mitte 5, ist gemessen senkrecht zu einer äußeren Oberfläche 22 der Schutzeinlage 1.

Das TPE kann aber auch homogen vorliegen.

Die Festigkeitsträger der Schutzlage 4 sind aus einer oder mehreren Fasern gebildet. Sie können in Form von Einzelfilamenten, von Filamentbündeln, von Garnen oder Korden ausgebildet sein. Es kann sich um Festigkeitsträger gemäß den in der Tabelle 1 angegebenen Festigkeitsträgern handeln.

Die Festigkeitsträger können eine Zugfestigkeitsdichte von mindestens 0,04 GPa/(g/cm^3), bevorzugt von mindestens 0,3 GPa/(g/cm^3), besonders bevorzugt von mindestens 1,8 GPa/(g/cm^3), aufweisen.

Eine Zugfestigkeitsdichte von mindestens 1,8 GPa/(g/cm^3) ermöglicht einen weiter verbesserten Pannenschutz. Ein entsprechender Festigkeitsträger kann Polyester-polyarylat und/oder Aramid und/oder PBO, bevorzugt Polyester-polyarylat, aufweisen oder daraus gebildet sein. Das Polyester-polyarylat liegt im Festigkeitsträger in der Regel als Polyester-polyarylat-Filamente vor, welche aus geschmolzenen Flüssigkristallpolymeren gesponnen sind. Die Festigkeitsträger können aber auch eine Zugfestigkeitsdichte von mindestens 0,04 bis weniger als 0,3 GPa/(g/cm^3) aufweisen. Ein derartiger Festigkeitsträger kann Polyamid 6.6 aufweisen oder daraus gebildet sein. Die Festigkeitsträger können auch eine Zugfestigkeitsdichte von mindestens 0,3 bis weniger als 1,8 GPa/(g/cm^3) aufweisen. Ein derartiger Festigkeitsträger kann Stahl aufweisen oder daraus gebildet sein. Der entsprechende Festigkeitsträger kann ein oder mehrere Stahlfilamente aufweisen oder daraus gebildet sein.

Die Festigkeitsträger können aus einem textilen Festigkeitsträgermaterial gebildet sein. Sie können aus einem oder mehreren Garnen bestehen und eine Gesamtfeinheit von 100 dtex bis 800 dtex aufweisen.

Die Festigkeitsträger der Schutzlage 4 können in einem Gewebe, bevorzugt in einem Cordgewebe oder einem Kreuzgewebe, angeordnet sein.

Der dargestellte Reifen 8 kann jeweils eine Reifenbreite mit einem Wert von 18 mm bis 122 mm, bevorzugt von 23 mm bis 65 mm oder von 50 mm bis 122 mm, aufweisen. Die jeweils zusammen mit dem Reifen 8 dargestellte Schutzeinlage 1 weist dann eine Eignung für die entsprechende Reifenbreite 10 auf.

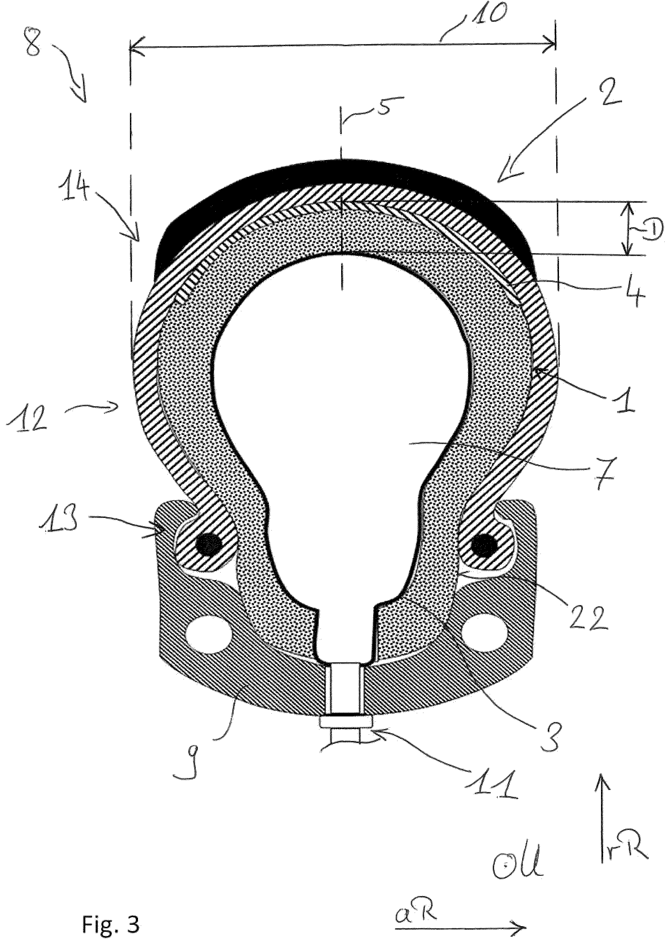

Die in den Figuren 1 und 3 dargestellten Schutzeinlagen 1 zeichnen sich dadurch aus, dass die Schutzlage 4 der Schutzeinlage 1 radial außerhalb des TPEs der Schutzeinlage angeordnet ist.

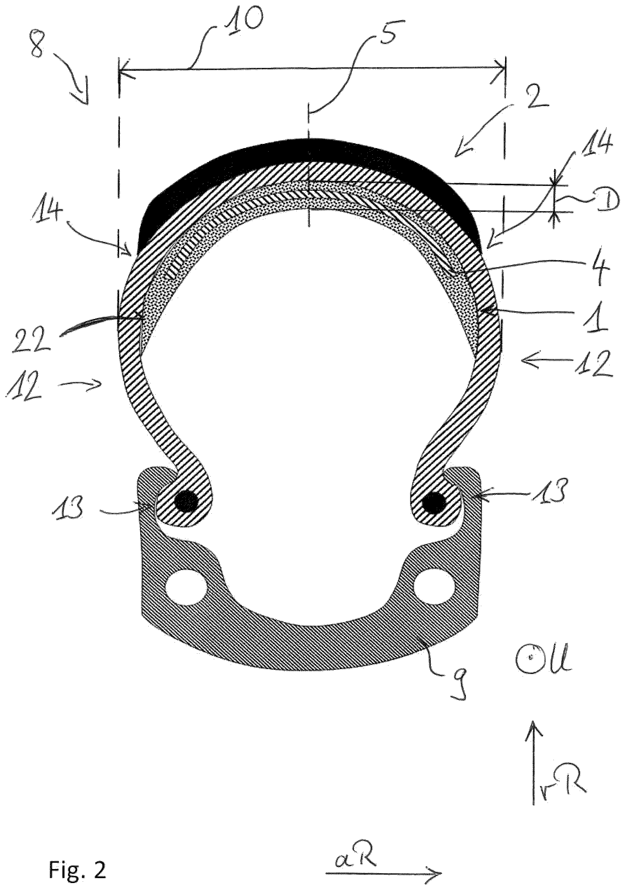

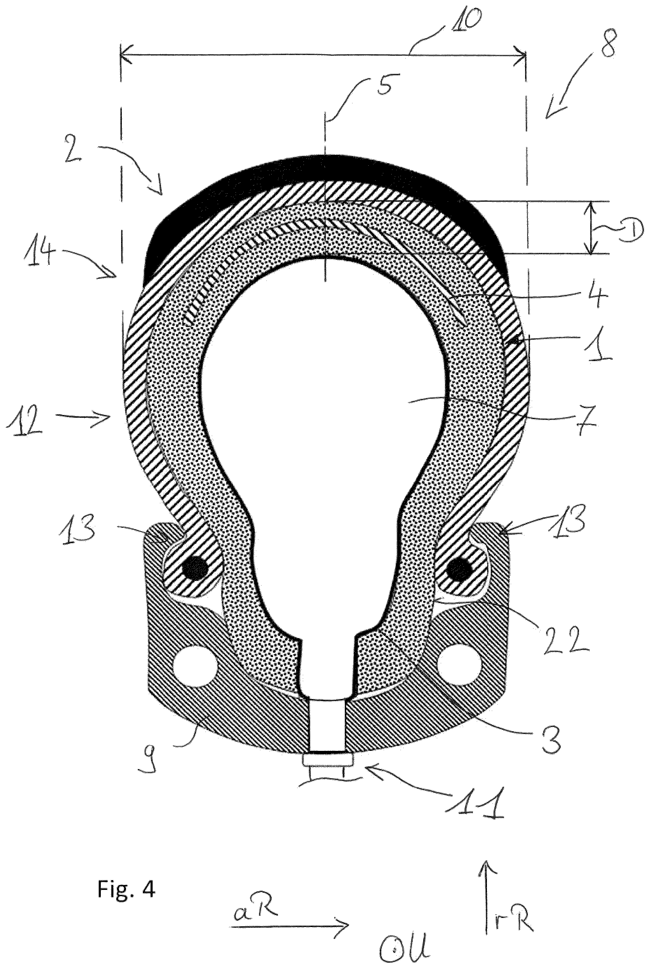

Die in den Figuren 2 und 4 dargestellten Schutzeinlagen 1 zeichnen sich dadurch aus, dass die Schutzlage 4 in das TPE der Schutzeinlage 1 eingebettet angeordnet ist.

Begriffe wie "axial", "radial", "innen", "außen", sind bezüglich der Schutzeinlage im Sinne der Erfindung zu verstehen als Angaben bezogen auf eine bestimmungsgemäße Anordnung der Schutzeinlage am Fahrzeugluftreifen und sind von der fachkundigen Person auf die Schutzeinlage an sich übertragbar.

In den Figuren 1 und 2 ist das Fahrzeugrad 8 frei von einem Schlauch dargestellt. Das Fahrzeugrad ist somit schlauchlos ausgebildet. Die Schutzeinlage 1 kann dann direkt die Luftkammer 7 mit begrenzen. Üblicherweise wird die Dichtigkeit eines solchen Fahrzeugrades durch ein Dichtmittel wie eine Dichtmilch sichergestellt. Beispielhaft erstreckt sich die Schutzeinlage 1 über die Schulterbereiche 14 des Reifens entlang der Seitenwände 12 des Reifens nach radial innen und endet dabei radial außerhalb der Wulstbereiche 13 des Reifens.

In den Figuren 3 und 4 ist das Fahrzeugrad 8 aufweisend einen Fahrschlauch 3 mit einem Ventilschaft 11 dargestellt. Die Luftkammer 7 ist somit vom Fahrschlauch 3 eingeschlossen. Die Schutzeinlage 1 ist somit zwischen Fahrzeugluftreifen 2 und Schlauch 3 angeordnet. Beispielhaft erstreckt sich die Schutzeinlage 1 entlang der Seitenwände 12 des Reifens nach radial innen bis radial innerhalb der Wulstbereiche 13 des Reifens. Die Schutzeinlage 1 kontaktiert die Felge 9.

Bevorzugt handelt in den Figuren 1 bis 4 jeweils um ein Rad bzw. eine Schutzeinlage bzw. Reifen für ein Fahrrad. Es kann sich um ein Rennrad, Trackingrad, Mountainbike, Gravelbike/CX oder Pedelec- bzw. S-Pedelec handeln. Die Schutzeinlage 1 ist in ihrer Dimension an die Reifenbreite 10 und an die Reifengröße abgestimmt.

Die Erfindung ist aber nicht auf eine Schutzeinlage für einen Fahrradreifen bzw. ein Rad für ein Fahrrad beschränkt. Gemäß der Erfindung ausgeführte Schutzeinlagen bzw. Räder können ferner für Fahrzeugluftreifen bzw. Fahrzeuge unterschiedlichen Typs, bevorzugt für ein Leichtfahrzeug, besonders bevorzugt für ein Fahrrad und/oder ein Motorrad und/oder einen Rollstuhl und/oder ein Leichtkraftfahrzeug, sein. Das Leichtfahrzeug kann einen Antriebsmotor als Hilfsmotor zur Trittunterstützung oder als alleinigen Antrieb aufweisen. Das Leichtfahrzeug kann aber auch keinen Antriebsmotor aufweisen.

### Bezugszeichenliste

### (Teil der Beschreibung)

- 1: Schutzeinlage
- 2: Fahrzeugluftreifen
- 3: Fahrschlauch
- 4: Schutzlage
- 5: axiale Mitte
- 7: Luftkammer
- 8: Fahrzeugrad
- 9: Felge
- 10: Reifenbreite
- 11: Ventilschaft
- 12: Seitenwand des Reifens
- 13: Wulstbereich des Reifens
- 14: Schulterbereich des Reifens
- 22: äußere Oberfläche der Schutzeinlage

- D: Materialstärke
- U: Längserstreckungsrichtung
- rR: radiale Richtung
- aR: axiale Richtung

## Patentansprüche

1. Schutzeinlage (1) für einen Fahrzeugluftreifen (2), bevorzugt Leichtfahrzeugreifen, besonders bevorzugt Fahrradreifen und/oder Rollstuhlreifen und/oder Motorradreifen, aufweisend ein Elastomer, **dadurch gekennzeichnet, dass**
das Elastomer ein thermoplastisches Elastomer (TPE) ist und dass die Schutzeinlage eine Schutzlage (4) mit Festigkeitsträgern aufweist.

2. Schutzeinlage (1) nach Anspruch 1, **dadurch gekennzeichnet, dass** das TPE ein expandiertes, bevorzugt expandiertes geschlossenporiges, TPE ist.

3. Schutzeinlage (1) nach zumindest dem vorhergehenden Anspruch, **dadurch gekennzeichnet, dass** das thermoplastische Elastomer homogen vorliegt.

4. Schutzeinlage (1) nach zumindest einem der vorhergehenden Ansprüche, **dadurch gekennzeichnet, dass** das thermoplastische Elastomer ein Block-Copolymerisat und/oder eine Mischung unverträglicher Polymere und/oder ein mit Weichmachern versetztes teilkristallines Polymer und/oder ein modifizierter Kautschuk, bevorzugt ein Block-Copolymerisat, besonders bevorzugt thermoplastisches Polyurethan (TPE-U), ist.

5. Schutzeinlage (1) nach zumindest einem der vorhergehenden Ansprüche, **dadurch gekennzeichnet, dass** die Schutzlage (4) der Schutzeinlage (1) radial außerhalb des TPEs der Schutzeinlage angeordnet und/oder dass die Schutzlage (4) in das TPE der Schutzeinlage (1) eingebettet angeordnet ist.

6. Schutzeinlage (1) nach zumindest einem der vorhergehenden Ansprüche, **dadurch gekennzeichnet, dass** die Festigkeitsträger eine Zugfestigkeitsdichte von mindestens 0,04 GPa/(g/cm^3), bevorzugt von mindestens 0,3 GPa/(g/cm^3), besonders bevorzugt von mindestens 1,8 GPa/(g/cm^3), aufweisen.

7. Schutzeinlage (1) nach zumindest einem der vorhergehenden Ansprüche, **dadurch gekennzeichnet, dass** die Festigkeitsträger ganz oder teilweise aus textilem Festigkeitsträgermaterial gebildet sind, welches ausgewählt ist aus der Gruppe bestehend aus Polyester-polyarylat, Aramid und Polyphenylenbenzobioxazol (PBO).

8. Schutzeinlage (1) nach zumindest einem der vorhergehenden Ansprüche, **dadurch gekennzeichnet, dass** die Festigkeitsträger ganz oder teilweise aus einem textilem Festigkeitsträgermaterial gebildet sind, welches ausgewählt ist aus der Gruppe bestehend aus Polyestern, Polyamiden, Polyurethanen, Glas, Kohlenstoff, Cellulosen, Polycarbonaten, Polyketonen und Kombinationen davon gebildet ist.

9. Schutzeinlage (1) nach zumindest einem der vorhergehenden Ansprüche, **dadurch gekennzeichnet, dass** die Festigkeitsträger aus einem textilen Festigkeitsträgermaterial gebildet sind und aus einem oder mehreren Garnen bestehen und eine Gesamtfeinheit von 100 dtex bis 800 dtex aufweisen.

10. Schutzeinlage (1) nach zumindest einem der vorhergehenden Ansprüche, **dadurch gekennzeichnet, dass** die Festigkeitsträger ein oder mehrere Stahlfilamente aufweisen oder daraus gebildet sein.

11. Schutzeinlage (1) nach zumindest einem der vorhergehenden Ansprüche, **dadurch gekennzeichnet, dass** die Festigkeitsträger in einem Gewebe, bevorzugt in einem Cordgewebe oder einem Kreuzgewebe, angeordnet sind.

12. Schutzeinlage (1) nach zumindest einem der vorhergehenden Ansprüche, **dadurch gekennzeichnet, dass** die Schutzeinlage (1) geeignet ist für eine Reifenbreite (10) mit einem Wert von 18 mm bis 122 mm, bevorzugt von 23 mm bis 65 mm oder von 50 mm bis 122 mm.

13. Schutzeinlage (1) nach zumindest einem der vorhergehenden Ansprüche, **dadurch gekennzeichnet, dass** es sich um eine Schutzeinlage für ein Fahrrad und/oder einen Rollstuhl, bevorzugt für ein Fahrrad, handelt.

14. Fahrzeugrad (8) für ein Fahrzeug, bevorzugt für ein Leichtfahrzeug, besonders bevorzugt für ein Fahrrad und/oder einen Krankenfahrstuhl und/oder ein Motorrad, aufweisend eine Felge (9), einen auf der Felge montierten Fahrzeugluftreifen (2), und einer zumindest in der axialen Mitte (5) radial innerhalb des Fahrzeugluftreifens angeordneten Schutzeinlage (1) gemäß zumindest einem der vorangegangenen Ansprüche,
**dadurch gekennzeichnet, dass**
dass die Schutzeinlage (1) ein thermoplastisches Elastomer (TPE) aufweist und dass die Schutzeinlage eine Schutzlage (4) mit Festigkeitsträgern aufweist.

15. Fahrzeugrad (8) gemäß dem vorhergehenden Anspruch, **dadurch gekennzeichnet, dass** die Schutzeinlage (1) im Bereich der Schulterbereiche (14) des Reifens endet und/oder sich entlang der Seitenwände (12) des Reifens nach radial innen erstreckt und dabei radial außerhalb der Wulstbereiche (13) des Reifens endet oder sich dabei bis radial innerhalb der Wulstbereiche (13) des Reifens erstrecken.
